# EUROPEAN PATENT APPLICATION

(11) **EP 4 471 928 A1**
(43) Date of publication of application: **04.12.2024**
(21) Application number: 23762680.9
(22) Date of filing: 13.01.2023
(51) Int. Cl.: H01M 10/0587

(54) **BATTERY CELL, BATTERY, AND BATTERY CELL MANUFACTURING DEVICE**

(30) Priority: 01.03.2022 CN 202220428844 U; 01.03.2022 CN 202220442079 U
(71) Applicant: Wuxi Lead Intelligent Equipment Co., Ltd., Wuxi, Jiangsu 214028 (CN)
(72) Inventor: ZHAO, Liujie, Wuxi, Jiangsu 214028 (CN); WANG, Fengjie, Wuxi, Jiangsu 214028 (CN)
(74) Representative: Rau, Schneck & Hübner Patentanwälte Rechtsanwälte PartGmbB
(86) International application number: PCT/CN2023/072043
(87) International publication number: WO 2023/165279

(57) **Abstract**

The present disclosure relates to a cell (100). Since at least a portion of the cathode pole piece (110) located in the bent areas (102) is formed with a broken portion (103), there is no positive electrode active material layer and thus no lithium ions in the area corresponding to the broken portion (103), therefore, the amount of lithium ions that can de-intercalate from the cathode pole piece (110) in the bent areas (102) will be significantly reduced. In addition, the present disclosure also relates to a battery and a cell manufacturing apparatus (200, 300, 400). (FIG. 1)

## Description

### TECHNICAL FIELD

The present disclosure relates to the technical field of lithium batteries, and in particular to a cell, a battery and a cell manufacturing apparatus.

### BACKGROUND

As a rechargeable secondary battery, the lithium battery has advantages such as small size, high energy density, high number of reusability cycles and high stability, and has been widely used in automotive power batteries. A cell of the lithium battery comprises a cathode pole piece and an anode pole piece, which may also be respectively referred to as a positive electrode pole piece and a negative electrode pole piece. The positive electrode pole piece is coated with a positive active material layer such as lithium manganate, lithium cobaltate, lithium iron phosphate and the like, and the negative electrode pole piece is coated with a negative active material layer such as graphite, silicon and the like.

When charging a lithium battery, lithium ions will de-intercalate from the positive electrode and intercalate into the negative electrode. However, when there is insufficient space in the negative electrode for lithium ions to intercalate thereinto, or when the rate at which lithium ions de-intercalate from the positive electrode is too fast, it may result in the de-intercalated lithium ions not being able to intercalate in equal amounts into the negative electrode active material layer at the negative electrode. The lithium ions that cannot intercalate into the negative electrode active material layer can only obtain electrons on the surface of the negative electrode pole piece and generate silver-white metallic lithium, that is, leading to the phenomenon of lithium precipitation.

The lithium precipitation has adverse influence on the charging efficiency, energy density and other parameters of the lithium battery. In addition, when there is severe lithium precipitation, lithium crystals may also be generated and may pierce through the diaphragm between the positive electrode pole piece and the negative electrode pole piece, thereby causing short-circuiting inside the battery and thus potentially severe safety hazards.

### SUMMARY

In view of the above, the present disclosure provides a compact cell, and further provides a battery and cell manufacturing apparatus.

A cell comprises a cathode pole piece, an anode pole piece and a diaphragm located between a cathode pole piece and an anode pole piece adjacent thereto, the cathode pole piece, the anode pole piece and the diaphragm are wound and pressed to form a flat structure, the cell has a straight area and bent areas located at two ends of the straight area, and the cathode pole piece at least partially located in the bent areas is provided with a broken portion extending along a width direction thereof.

In one of embodiments, the broken portion divides the cathode pole piece where it is located into at least two pole piece subsections, which are integrally connected via a connector.

In one of embodiments, the connector is a tape bonded to at least one side of the cathode pole piece to cover the broken portion.

In one of embodiments, the cathode pole piece is capable of forming one bent portion every time it winds around one of the bent areas, and is formed with a plurality of bent portions from a winding starting end to a winding terminating end, and the broken portion is formed on a first one of the plurality of bent portions from the winding starting end to the winding terminating end.

In one of embodiments, from the winding starting end to the winding terminating end, each of the first two, the first four, or the first six bent portions is formed with the broken portion.

In one of embodiments, a second broken portion is formed at a position, corresponding to the broken portion, of the anode pole piece at least partially located in the bent areas.

A battery comprises a casing and the cell according to any one of the above preferred embodiments, the cell is contained in the casing and the casing is filled with electrolyte.

Regarding the above cell and the battery, since at least a portion of the cathode pole piece located in the bent areas is formed with a broken portion, there is no positive electrode active material layer and thus no lithium ions in the area corresponding to the broken portion, therefore, the amount of lithium ions that can de-intercalate from the cathode pole piece in the bent areas will be significantly reduced. The lithium precipitation phenomena generally occurs in the bent areas of the cell, because bending may cause the negative electrode active material layer on the anode pole piece to fall off, this will lead to a reduction in the lithium intercalation sites on the anode pole piece, and subsequently lead to the lithium ions de-intercalated from the cathode pole piece not being able to intercalate into the anode pole piece in equal amounts. However, since the amount of lithium ions that can de-intercalate from the cathode pole piece of the above cell in the bent areas is also significantly reduced, the amount of lithium ions that can obtain electrons and form metallic lithium will also be significantly reduced. Therefore, the above cell and battery may effectively suppress the occurrence of the lithium precipitation phenomena.

A cell manufacturing apparatus, comprising:
a first feeding device configured for providing a cathode pole piece;
a pole piece processing device capable of forming a broken portion in a preset area of the cathode pole piece and providing a connector, the broken portion dividing the cathode pole piece where it is located into at least two pole piece subsections which are integrally connected via the connector;
a second feeding device configured for providing an anode pole piece;
a diaphragm feeding device configured for providing a diaphragm between a cathode pole piece and an anode pole piece adjacent thereto;
a winding device comprising a winding needle mechanism which is capable of winding the anode pole piece, the cathode pole piece and the diaphragm into a cell;
wherein the cell is capable of being pressed into a flat structure with a straight area and bent areas, and the preset area is located in the bent areas.

In one of embodiments, the pole piece processing device comprises:
at least two holding-transporting mechanisms, each of which is capable of holding and transporting the cathode pole piece;
a cutting mechanism provided between two adjacent holding-transporting mechanisms, each cutting mechanism being capable of cutting off the cathode pole piece so as to obtain at least two pole piece subsections, the at least two holding-transporting mechanisms being capable of holding the at least two pole piece subsections respectively and pulling two adjacent pole piece subsections apart to form the broken portion;
a tape-bonding mechanism, which is capable of bonding a tape as the connector on at least one side of the cathode pole piece to cover the broken portion so as to integrally connect the at least two pole piece subsections.

In one of embodiments, further comprising a second pole piece processing device, which is configured for forming a second broken portion in an area, corresponding to the preset area, of the anode pole piece.

Regarding the above cell manufacturing apparatus, the manufactured cell has bent areas and a straight area, and the cathode pole piece at least partially located in the bent areas is formed with the broken portion. There is no positive electrode active material layer and thus no lithium ions in the area corresponding to the broken portion, therefore, the amount of lithium ions that can de-intercalate from the cathode pole piece located in the bent areas will be significantly reduced. As a result, the manufactured cell can effectively suppress the occurrence of lithium precipitation phenomena. Moreover, the cell manufacturing apparatus may realize continuous manufacture of the cell with high efficiency.

A cell manufacturing apparatus comprises:
a first feeding device comprising a cathode unwinding mechanism, a pole piece processing mechanism, a first diaphragm unwinding mechanism and a first compounding mechanism, wherein the cathode unwinding mechanism is configured for providing a cathode pole piece, the pole piece processing mechanism is capable of forming a broken portion in a preset area of the cathode pole piece and providing a connector, the broken portion divides the cathode pole piece where it is located into at least two pole piece subsections which are integrally connected via the connector, the first diaphragm unwinding mechanism is configured for unwinding a first diaphragm, and the first compounding mechanism is capable of receiving the cathode pole piece and the first diaphragm and compounding them, so as to obtain a first compound material strip;
a second feeding device comprising an anode unwinding mechanism, a second diaphragm unwinding mechanism and a second compounding mechanism, wherein the anode unwinding mechanism is configured for providing an anode pole piece, the second diaphragm unwinding mechanism is configured for unwinding a second diaphragm, and the second compounding mechanism is capable of receiving the anode pole piece and the second diaphragm and compounding them, so as to obtain a second compound material strip;
a winding device comprising a winding needle mechanism which is capable of winding the first compound material strip and the second compound material strip into a cell;
wherein the cell is capable of being pressed into a flat structure with a straight area and bent areas, and the preset area is located in the bent areas.

In one of embodiments, the pole piece processing mechanism comprises:
at least two holding-transporting mechanisms, each of which is capable of holding and transporting the cathode pole piece;
a cutting mechanism provided between two adjacent holding-transporting mechanisms, each cutting mechanism being capable of cutting the cathode pole piece off to obtain at least two pole piece subsections, the at least two holding-transporting mechanisms being capable of holding the at least two pole piece subsections respectively and pulling the two adjacent pole piece subsections apart to form the broken portion
a tape-bonding mechanism, which is capable of bonding a tape serving as the connector on at least one side of the cathode pole piece, to cover the broken portion so as to integrally connect the at least two pole piece subsections.

Regarding the above cell manufacturing apparatus, not only the manufactured cell effectively suppresses the occurrence of lithium precipitation phenomena, but also the first diaphragm is compounded, before winding, with the cathode pole piece to form the first compound material strip, and the second diaphragm is compounded with the anode pole piece to form the second compound material strip. In this way, it is possible to reduce the amount of material strips entering the winding device, and thus avoid fluctuations in the relative position of the pole piece and the diaphragm in the process of winding, thereby ensuring that each film layer in the manufactured cell has a high degree of alignment and is not prone to misplace, and facilitating the control of tension for speeding up the device.

A cell manufacturing apparatus comprises:
a first feeding device configured for providing a first compound material strip, the first compound material strip comprising a first diaphragm and a cathode pole piece covering the first diaphragm;
a pole piece processing device capable of forming a broken portion on the cathode pole piece of the first compound material strip;
a second feeding device configured for providing a second compound material strip, the second compound material strip comprising a second diaphragm and an anode pole piece covering the second diaphragm; and
a winding device comprising a winding needle mechanism which is capable of winding the first compound material strip and the second compound material strip into a cell;
wherein the cell is capable of being pressed into a flat structure with a straight area and bent areas, and the broken portion is located in the bent areas.

In one of embodiments, the first feeding device comprises:
a cathode unwinding mechanism configured for unwinding the cathode pole piece;
a first diaphragm unwinding mechanism configured for unwinding the first diaphragm; and
a first compounding mechanism capable of receiving the cathode pole piece and the first diaphragm and compounding them so as to obtain the first compound material strip.

In one of embodiments, the pole piece processing device comprises a holding-transporting mechanism and a cutting mechanism, which are both provided between the cathode-unwinding mechanism and the first compounding mechanism, the holding-transporting mechanism is capable of holding and transporting the cathode pole piece, the cutting mechanism is capable of cutting off the cathode pole piece between the holding-transporting mechanism and the first compounding mechanism, and the holding-transporting mechanism is capable of pulling apart at a cut-off position to form the broken portion.

In one of embodiments, the pole piece processing device further comprises a tape-bonding mechanism, which is capable of bonding a first tape on a side of the cathode pole piece so as to bond, to the first diaphragm, the cathode pole piece at a side of the broken portion proximate to the holding-transporting mechanism.

In one of embodiments, the tape-bonding mechanism is further capable of bonding a second tape on a side of the cathode pole piece so as to bond, to the first diaphragm, the cathode pole piece at a side of the broken portion distal to the holding-transporting mechanism.

In one of embodiments, the first compounding mechanism comprises an upper pressure roller and a lower pressure roller, and the cathode pole piece and the first diaphragm are capable of passing between the upper pressure roller and the lower pressure roller.

In one of embodiments, the second feeding device comprises:
an anode unwinding mechanism configured for unwinding the anode pole piece;
a second diaphragm unwinding mechanism configured for unwinding the second diaphragm; and
a second compounding mechanism capable of receiving the anode pole piece and the second diaphragm and compounding them so as to obtain the second compound material strip.

In one of embodiments, further comprising a second pole piece processing device, which is configured for forming a second broken portion in an area, corresponding to the broken portion, of the anode pole piece of the second compound material strip.

Regarding the above cell manufacturing apparatus, the manufactured cell has bent areas and a straight area, and the cathode pole piece at least partially located in the bent areas is formed with the broken portion. There is no positive electrode active material layer and thus no lithium ions in the area corresponding to the broken portion, therefore the amount of lithium ions that can de-intercalate from the cathode pole piece located in the bent areas will be significantly reduced. The lithium precipitation phenomena generally occurs in the bent areas of the cell, and since bending may cause the negative electrode active material layer on the anode pole piece to fall off, this will lead to a reduction in the lithium intercalation sites on the anode pole piece, and subsequently lead to the lithium ions de-intercalated from the cathode pole piece not being able to intercalate into the anode pole piece in equal amounts. However, since the amount of lithium ions that can de-intercalate from the cathode pole piece of the above cell in the bent areas is also significantly reduced, the amount of lithium ions that can obtain electrons and form metallic lithium will also be significantly reduced. Therefore, the above cell manufacturing apparatus may effectively suppress the occurrence of the lithium precipitation phenomena.

### BRIEF DESCRIPTION OF THE DRAWINGS

In order to more clearly illustrate embodiments of the present application or technical solutions in the prior art, accompanying drawings that need to be used in description of the embodiments or the prior art will be briefly introduced as follows. Obviously, drawings in following description are only the embodiments of the present application. For those skilled in the art, other drawings can also be obtained according to the disclosed drawings without creative efforts.
FIG. 1 is a schematic cross-sectional view of a cell in a direction perpendicular to a winding axis in a first embodiment of the present disclosure;
FIG. 2 is a cross-sectional view of a cell in a direction perpendicular to the winding axis in a second embodiment of the present disclosure;
FIG. 3 is an expanded schematic view of a part of the cathode pole piece of the cell located in the bent areas shown in FIG. 1 or FIG. 2;
FIG. 4 is a cross-sectional view of a cell in a direction perpendicular to the winding axis in a third embodiment of the present disclosure;
FIG. 5 is an expanded schematic view of a part of the cathode pole piece of the cell in the bent areas shown in FIG. 4;
FIG. 6 is a schematic structural diagram of a cell manufacturing apparatus according to a first embodiment of the present disclosure;
FIG. 7 is a schematic structural diagram of a pole piece processing device in the cell manufacturing apparatus shown in FIG. 6;
FIG. 8 is a schematic structural diagram of a cell manufacturing apparatus according to a second embodiment of the present disclosure;
FIG. 9 is a schematic structural diagram of a pole piece processing mechanism in the cell manufacturing apparatus shown in FIG. 8;
FIG. 10 is a schematic structural diagram of a cell manufacturing apparatus according to a third embodiment of the present disclosure.

### DETAILED DESCRIPTION

In order to make the above objects, features and advantages of the present disclosure more clearly understood, specific embodiments of the present disclosure will be described in detail below with reference to the accompanying drawings. In a following description, numerous specific details are set forth in order to provide a thorough understanding of the present disclosure. However, the present disclosure may be implemented in many other ways different from those described here, and those skilled in the art can make similar improvements without violating a connotation of the present disclosure. Therefore, the present disclosure is not limited by the specific embodiments disclosed below.

In the description of the present disclosure, it should be understood that, an orientation or positional relationship indicated by terms "center", "longitudinal", "lateral", "length", "width", "thickness", "upper", "lower", "front", "back", "left", "right", "vertical", "horizontal", "top", "bottom", inner", "outer", "clockwise", "counterclockwise", "axial", "radial", "circumferential" is based on the orientation or positional relationship shown in the accompanying drawings, and is only for convenience of describing the present disclosure and simplifying the description, rather than indicating or implying that a device or element referred to must be provided with a particular orientation, be constructed and operate in a particular orientation, and therefore should not be understood as a limitation to the present disclosure.

In addition, terms "first" and "second" are only configured for descriptive purposes and should not be understood as indicating or implying relative importance or implying a number of indicated technical features. Therefore, a feature delimited with "first", "second" may expressly or implicitly comprise at least one of those features. In a description of the present disclosure, "a plurality" means at least two, such as two, three, etc., unless expressly and specifically defined otherwise.

In the present disclosure, unless expressly specified and limited otherwise, terms "installed", "communicated", "connected", "fixed" and other terms should be interpreted in a broad sense, for example, it may be a fixed connection, a detachable connection, or an integrated; it may be a mechanical connection or an electrical connection; it may be directly connected, or indirectly connected through an intermediate medium, and it may be an internal communication between two elements or an interaction relationship between the two elements, unless otherwise explicitly defined. For those of ordinary skill in the art, specific meanings of the above terms in the present disclosure may be understood according to specific situations.

In the present disclosure, unless expressly stated and defined otherwise, a first feature "on" or "under" a second feature may be that the first feature is in direct contact with the second feature, or the first feature and the second feature are indirectly contacted through an intermediary. In addition, the first feature being "above", "over" and "on" the second feature may mean that the first feature is directly above or obliquely above the second feature, or simply means that the first feature is higher than the second feature in a horizontal direction. The first feature being "below", "under" and "below" the second feature may mean that the first feature is directly below or obliquely below the second feature, or simply means that the first feature is smaller than the second feature in a horizontal direction.

It should be noted that when an element is referred to as being "fixed to" or "arranged on" another element, it may be directly on another element, or there may be an intervening element therebetween. When an element is referred to as being "connected" to another element, it may be directly connected to another element or intervening elements may also be present. Terms "vertical", "horizontal", "upper", "lower", "left", "right" and similar expressions used here are only for illustration purposes rather than indicating the only implementation.

The present disclosure provides a cell, a battery and a cell manufacturing apparatus. Wherein, the above battery comprises a casing and the above cell, the cell is contained in the casing and the casing is filled with electrolyte; the above cell manufacturing apparatus is configured for manufacturing the above cell.

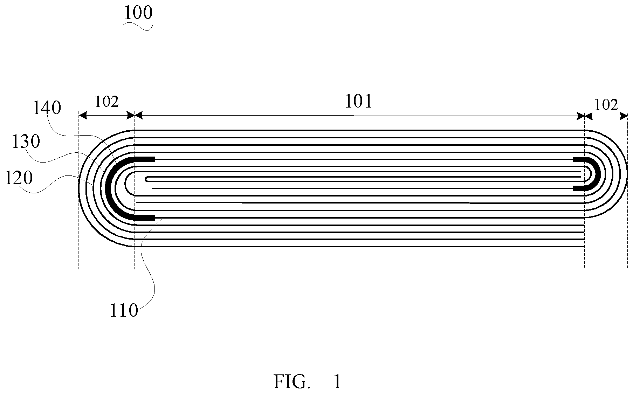

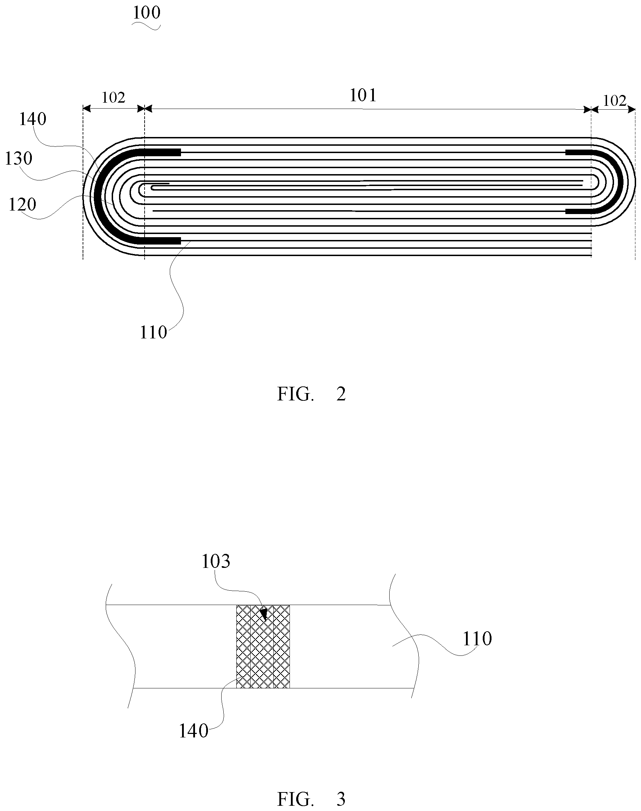

Please refer to FIGS. 1 and 3, the cell 100 in the first embodiment of the present disclosure comprises a cathode pole piece 110, an anode pole piece 120, and a diaphragm 130. The diaphragm 130 is located between the cathode pole piece 110 and the anode pole piece 120 adjacent thereto, and is configured for separating the cathode pole piece 110 from the anode pole piece 120 to avoid the short-circuiting. When manufacturing the cell 100, the cathode pole piece 110, the anode pole piece 120 and the diaphragm 130 are first compounded, and then wound and pressed to form a flat structure.

The relative positions of the cathode pole piece 110, the anode pole piece 120, and the diaphragm 130 may be different for different types of the cell 100. For example, in the present embodiment, there is one cathode pole piece 110 and one anode pole piece 120, and there are two diaphragms 130. One of the two diaphragms 130 is located at the bottom, the cathode pole piece 110 is stacked thereon, the other diaphragm 130 is provided on the cathode pole piece 110, and the anode pole piece 120 is stacked on the second diaphragm 132.

Obviously, in other embodiments, such as the one shown in FIG. 2, in the cell 100 in the second embodiment of the present disclosure, the positions of the cathode pole piece 110 and the anode pole piece 120 may be interchangeable.

Further, the cell 100 has a straight area 101 and bent areas 102 at both ends of the straight area 101. The straight area 101 refers to an area with a parallel structure in the cell 100 of the flat structure, that is, the cathode pole piece 110, the anode pole piece 120, and the diaphragm 130 in the straight area 101 are essentially parallel to each other, and the surfaces of each layer of the cathode pole piece 110, anode pole piece 120, and diaphragm 130 in the straight area 101 are substantially flat surfaces. The bent areas 102 refer to areas with bent structures in the cell 100 of the flat structure, that is, the cathode pole piece 110, the anode pole piece 120, and the diaphragm 130 in the bent areas 102 are all bent, and the surfaces of each layer of the cathode pole piece 110, the anode pole piece 120, and the diaphragm 130 are curved surfaces.

The cathode pole piece 110 is coated with a positive electrode active material layer formed from lithium manganate, lithium cobaltate, lithium iron phosphate, etc., while the anode pole piece 120 is coated with a negative electrode active material layer formed from graphite, silicon, etc. The applicant has found that the cathode pole piece 110 and the anode pole piece 120 located in the bent areas 102 are prone to dislodge their respective active materials during bending, referred to as "powdering off'. Especially the dislodgment of the negative electrode active material on the anode pole piece 120 may cause that the intercalated lithium sites of the negative active material layer of the anode pole piece 120 are less than the amount of lithium ions that can be provided by the positive active material layer of the cathode pole piece 110 adjacent thereto, and thus that the lithium ions de-intercalated from the positive electrode active material layer will not be able to be intercalated in equal amounts in the negative electrode active material layer. As a result, lithium precipitation tends to occur in the bent areas 102 of the cell 100 during charging.

Correspondingly, since the cathode pole piece 110 and the anode pole piece 120 in the straight area 101 do not need to be bent in the forming process of the cell 100 and hardly experience "powdering off', the lithium intercalation sites in the negative electrode active material layer of the anode pole piece 120 in the straight area 101 may be well-matched with the amount of lithium ions that can be provided by the positive electrode active material layer of the cathode pole piece 110 adjacent thereto. Therefore, the straight area 101 of the cell 100 is generally free from the lithium precipitation phenomenon.

The lithium precipitation may have a series of unfavorable effects on the cell 100 and the battery, and there is a need to inhibit the occurrence of lithium precipitation in the cell 100, especially in the bent areas 102.

Further referring to FIG. 3, the cathode pole piece 110 at least partially in the bent areas 102 forms a broken portion 103 extending in the width direction, which divides the cathode pole piece 110 into at least two pole piece subsections (not labeled in the figure), and the at least two pole piece subsections are integrally connected via a connector 140.

The broken portion 103 is capable of splitting the cathode pole piece 110. Because the area corresponding to the broken portion 103 has no positive electrode active material layer and no lithium ion, therefore, the amount of lithium ions that may be de-intercalated on the cathode pole piece 110 located in the bent areas 102 will be significantly reduced. Therefore, even if the adjacent anode pole pieces 120 experience "powdering off' in the process of bending, since the amount of the lithium ions that may be de-intercalated from the cathode pole piece 110 is also reduced, it is possible to avoid that the lithium intercalation sites of the negative electrode active material layer of the anode pole piece 120 are far less than the amount of lithium ions that can be provided by the positive electrode active material layer of the cathode pole piece 110 adjacent thereto, thereby reducing or avoiding the occurrence of lithium precipitation phenomenon.

Specifically, in the present embodiment, the anode pole piece 120 at least partially located in the bent areas 102 has a second broken portion (not shown) formed at a position corresponding to the broken portion 103.

Similarly, the anode pole piece 120 does not have any negative electrode active material at a position corresponding to the second broken portion. Therefore, when the anode pole piece 120 is bent at the bent areas 102 of the cell 100, it is possible to effectively prevent "powdering off' of the negative electrode active material and thus avoid the presence of excessive powder impurities in the manufactured cell 100, which is conducive to enhancing the quality of the cell 100.

Although the presence of the second broken portion will to some extent reduce the content of the negative electrode active material on the anode pole piece 120 located in the bent areas 102 and thus lead to a reduction in the amount of lithium intercalation sites, in the absence of the second broken portion, this reduced negative electrode active material generally also falls off from the surface of the anode pole piece 120 during bending. Moreover, the existence of the second broken portion may reduce the resistance when the anode pole piece 120 is bent, and may prevent parts other than the second broken portion from "powdering off' to some extent. That is, the loss of the negative electrode active material caused by the second broken portion is actually reduced compared to the conventional case. Therefore, the provision of the second broken portion may also suppress the occurrence of the lithium precipitation phenomenon to some extent.

The connector 140 is an insulating member and is capable of integrally connecting at least two pole piece subsections, so as to prevent the cathode pole piece 110 from being displaced during winding, which helps improve the stability and reliability of the cell 100. Specifically, in the present embodiment, the connector 140 is a tape bonded to at least one side of the cathode pole piece 110 to cover the broken portion 103.

The tape may be connected to the two adjacent pole piece subsections, thereby integrally connecting the two pole piece subsections. The tape may be bonded to one side of the cathode pole piece 110, or it may be bonded to two opposite sides of the cathode pole piece 110. In the present embodiment, to enhance reliability, both sides of the cathode pole piece 110 are bonded with the tape. The number of tapes generally corresponds to the number of broken portions 103; for example, if there are two broken portions 103 formed on the cathode pole piece 110, then four tapes are required. Moreover, each tape is adhered along the extension direction of the broken portion 103, that is, in the width direction of the cathode pole piece 110.

Every time the cathode pole piece 110 winds around one of the bent areas 102, one bent portion (not labeled in the figure) is formed. The cathode pole piece 110 is formed with a plurality of bent portions from a winding starting end to a winding terminating end. The winding starting end refers to the end where the winding process begins, and is typically located at the center of the cell 100, while the winding terminating end is located outside the cell 100. Theoretically, if each layer of the cathode pole piece 110 in the bent areas 102, i.e., each bent portion, forms a broken portion 103, then it is possible to minimize the occurrence of the lithium precipitation phenomena, however, this would complicate the forming process of the cell 100 and increase manufacturing costs.

Therefore, in the present embodiment, the cathode pole piece 110 is formed with a broken portion 103 on the first bent portion from the winding starting end to the winding terminating end. The above first bent portion is located at one end of the cell 100 (the left end shown in FIG. 1), and refers to a layer of the cathode pole piece 110 located in the bent areas 102 and closest to the center of the cell 100. In the process of bending, the pole piece closer to the center of the cell 100 has a greater degree of bending, and hence the active material is most likely to fall off, and the lithium precipitation phenomenon is also the most significant. Therefore, by forming a broken portion 103 on the innermost layer of the cathode pole piece 110 in the bent areas 102, it is possible to significantly reduce the lithium precipitation phenomenon between the innermost layer of the cathode pole piece 110 and the adjacent anode pole piece 120, thereby reducing or avoiding the lithium precipitation phenomenon in the cell 100 under the premise of the simplest process.

The amount of the pole piece subsections is determined by the amount of the broken portions 103. For example, two pole piece subsections may be divided by means of one broken portion 103, three pole piece subsections may be divided by means of two broken portions 103, and so on. Typically, for the case where the cathode pole piece 110 is bent multiple times in the bent areas 102, the first two or the first four or the first six bent portions of the cathode pole piece 110 from the winding starting end to the winding terminating end all have broken portions 103 formed.

The specific number of broken portions 103 may be adjusted according to the amount of bending of the cathode pole piece 110. When broken portions 103 are formed on both the first two bent portions of the cathode pole piece 110, in the bent areas 102 at both ends of the cell 100, the first layer of cathode pole piece 110 from the inside to the outside is formed with a broken portion 103; when broken portions 103 are formed on the first four bent portions of the cathode pole piece 110, in the bent areas 102 at both ends of the cell 100, the first two layers of the cathode pole piece 110 from the inside to the outside are formed with the broken portions 103; and when broken portions 103 are formed on the first six bent portions of the cathode pole piece 110, in the bent areas 102 at both ends of the cell 100, the first three layers of the cathode pole piece 110 from the inside to the outside are formed with the broken portions 103. In this way, it is possible to further enhance the suppression effect on the lithium precipitation phenomena.

Regarding the above cell 100, since at least a portion of the cathode pole piece 110 located in the bent areas 102 is formed with the broken portion 103, there is no positive electrode active material layer and thus no lithium ions in the area corresponding to the broken portion 103, therefore, the amount of lithium ions that can de-intercalate from the cathode pole piece 110 in the bent areas 102 will be significantly reduced. The lithium precipitation phenomena generally occurs in the bent areas 102 of the cell 100, because bending may cause the negative electrode active material layer on the anode pole piece 120 to fall off, this will lead to a reduction in the lithium intercalation sites on the anode pole piece 120, and subsequently lead to the lithium ions de-intercalated from the cathode pole piece 110 not being able to intercalate into the anode pole piece 120 in equal amounts. However, since the amount of lithium ions that can de-intercalate from the cathode pole piece 110 of the above cell 100 in the bent areas 102 is also significantly reduced, the amount of lithium ions that can obtain electrons and form metallic lithium will also be significantly reduced. Therefore, the above cell 100 may effectively suppress the occurrence of the lithium precipitation phenomena.

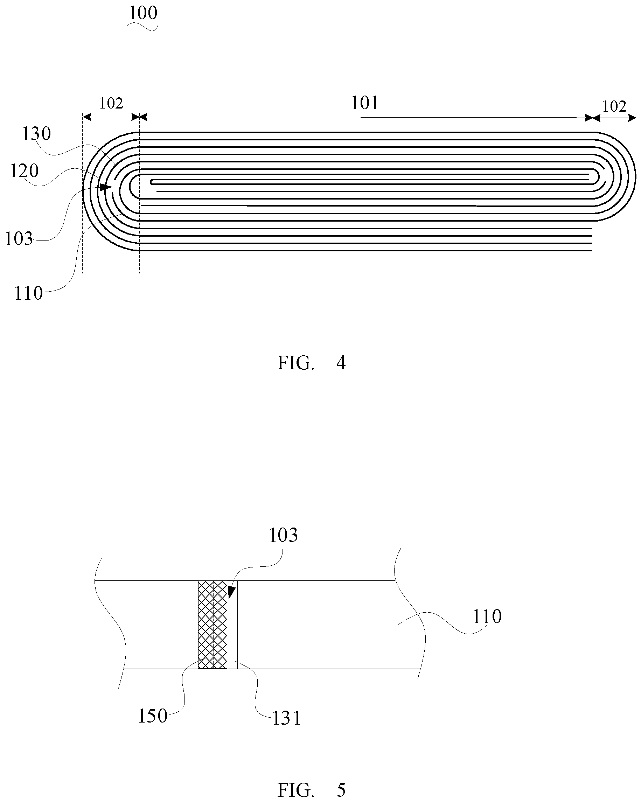

Please refer to FIGS. 4 and 5, the cell 100 in the third embodiment of the present disclosure comprises a cathode pole piece 110, an anode pole piece 120, and a diaphragm 130. The diaphragm 130 is located between the cathode pole piece 110 and the anode pole piece 120 adjacent thereto, and is configured for separating the cathode pole piece 110 from the anode pole piece 120 to avoid the short-circuiting. The cathode pole piece 110, the anode pole piece 120 and the diaphragm 130 are first compounded with each other, and then wound and pressed to form a flat structure.

Further, the cell 100 has a straight area 101 and bent areas 102 at both ends of the straight area 101. The straight area 101 refers to an area with a parallel structure in the cell 100 of the flat structure, that is, the cathode pole piece 110, the anode pole piece 120, and the diaphragm 130 in the straight area 101 are essentially parallel to each other, and the surfaces of each layer of the cathode pole piece 110, anode pole piece 120, and diaphragm 130 in the straight area 101 are substantially flat surfaces. The bent areas 102 refer to areas with bent structures in the cell 100 of the flat structure, that is, the cathode pole piece 110, the anode pole piece 120, and the diaphragm 130 in the bent areas 102 are all bent, and the surfaces of each layer of the cathode pole piece 110, the anode pole piece 120, and the diaphragm 130 are curved surfaces.

The cathode pole piece 110 is coated with a positive electrode active material layer formed from lithium manganate, lithium cobaltate, lithium iron phosphate, etc., while the anode pole piece 120 is coated with a negative electrode active material layer formed from graphite, silicon, etc. The applicant has found that the cathode pole piece 110 and the anode pole piece 120 located in the bent areas 102 are prone to dislodge their respective active materials during bending, referred to as "powdering off". Especially the dislodgment of the negative electrode active material on the anode pole piece 120 may cause that the intercalated lithium sites of the negative active material layer of the anode pole piece 120 are less than the amount of lithium ions that can be provided by the positive active material layer of the cathode pole piece 110 adjacent thereto, and thus that the lithium ions de-intercalated from the positive electrode active material layer will not be able to be intercalated in equal amounts in the negative electrode active material layer. As a result, lithium precipitation tends to occur in the bent areas 102 of the cell 100 during charging.

Correspondingly, since the cathode pole piece 110 and the anode pole piece 120 in the straight area 101 do not need to be bent in the forming process of the cell 100 and hardly experience "powdering off", the lithium intercalation sites in the negative electrode active material layer of the anode pole piece 120 in the straight area 101 may be well-matched with the amount of lithium ions that can be provided by the positive electrode active material layer of the cathode pole piece 110 adjacent thereto. Therefore, the straight area 101 of the cell 100 is generally free from the lithium precipitation phenomenon.

The lithium precipitation may have a series of unfavorable effects on the cell 100 and the battery, and there is a need to inhibit the occurrence of lithium precipitation in the cell 100, especially in the bent areas 102. Please refer to FIG. 5 again, the cathode pole piece 110 at least partially in the bent areas 102 forms a broken portion 103 extending in the width direction.

Compared with the cell 100 in the first embodiment and the cell 100 in the second embodiment, the difference of the cell 100 in the third embodiment comprises: there is no connector 140 to integrally connect the pole piece subsection on both sides of the broken portion 103.

Since the area corresponding to the broken portion 103 does not have a positive electrode active material layer, no lithium ions are present, and thus the amount of lithium ions that may be de-intercalated on the cathode pole piece 110 located in the bent areas 102 will be significantly reduced. Therefore, even if the adjacent anode pole pieces 120 experience "powdering off' in the process of bending, since the amount of the lithium ions that may be de-intercalated from the cathode pole piece 110 is also reduced, it is possible to avoid that the lithium intercalation sites of the negative electrode active material layer of the anode pole piece 120 are far less than the amount of lithium ions that can be provided by the positive electrode active material layer of the cathode pole piece 110 adjacent thereto, thereby reducing or avoiding the occurrence of lithium precipitation phenomenon.

The broken portion 103 may divide the cathode pole piece 110 into two pole piece subsections. Specifically, in the present embodiment, a first tape 150 is bonded to one side of the cathode pole piece 110, and may bond the pole piece subsection to the diaphragm 130, thereby preventing the cathode pole piece 110 from separating from the diaphragm 130 in the process of winding.

Specifically, in the present embodiment, the anode pole piece 120 at least partially located in the bent areas 102 has a second broken portion (not shown) formed at a position corresponding to the broken portion 103.

Similarly, the anode pole piece 120 does not have a negative electrode active material at a position corresponding to the second broken portion. Therefore, when the anode pole piece 120 is bent at the bent areas 102 of the cell 100, it is possible to effectively prevent "powdering off' of the negative electrode active material and thus avoid the presence of excessive powder impurities in the manufactured cell 100, which is conducive to enhancing the quality of the cell 100.

Although the presence of the second broken portion will to some extent reduce the content of the negative electrode active material on the anode pole piece 120 located in the bent areas 102 and thus lead to a reduction in the amount of lithium intercalation sites, in the absence of the second broken portion, this reduced negative electrode active material also generally falls off from the surface of the anode pole piece 120 during bending. Moreover, the existence of the second broken portion may reduce the resistance when the anode pole piece 120 is bent, and may prevent parts other than the second broken portion from "powdering off' to some extent. That is, the loss of the negative electrode active material caused by the second broken portion is actually reduced compared to the conventional case. Therefore, the provision of the second broken portion may also suppress the occurrence of the lithium precipitation phenomenon to some extent.

Regarding the above cell 100, since at least a portion of the cathode pole piece 110 located in the bent areas 102 is formed with the broken portion 103, there is no positive electrode active material layer and thus no lithium ions in the area corresponding to the broken portion 103, and thus the amount of lithium ions that can de-intercalate from the cathode pole piece 110 in the bent areas 102 will be significantly reduced. The lithium precipitation phenomena generally occurs in the bent areas 102 of the cell 100, and since bending may cause the negative electrode active material layer on the anode pole piece 120 to fall off, this will lead to a reduction in the lithium intercalation sites on the anode pole piece 120, and subsequently lead to the lithium ions de-intercalated from the cathode pole piece 110 not being able to intercalate into the anode pole piece 120 in equal amounts. However, since the amount of lithium ions that can de-intercalate from the cathode pole piece 110 of the above cell 100 in the bent areas 102 is also significantly reduced, the amount of lithium ions that can obtain electrons and form metallic lithium will also be significantly reduced. Therefore, the above cell 100 may effectively suppress the occurrence of the lithium precipitation phenomena.

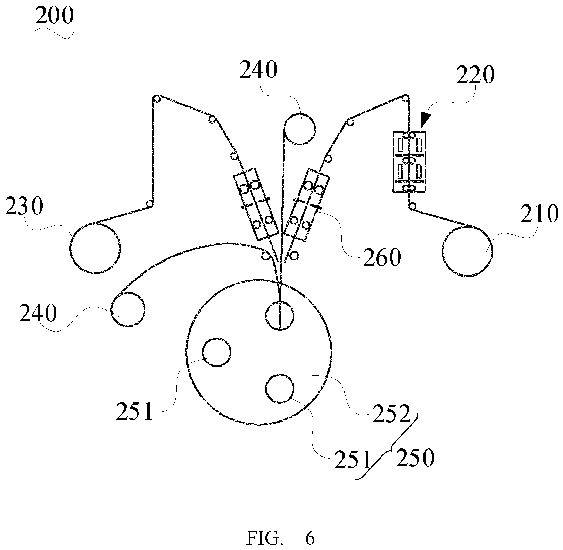

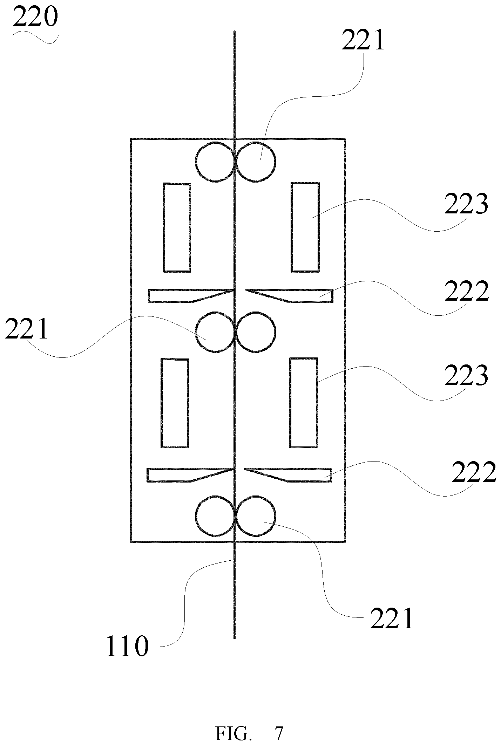

Please refer to FIGS. 6 and 7, the cell manufacturing apparatus 200 in the first embodiment of the present disclosure comprises a first feeding device 210, a pole piece processing device 220, a second feeding device 230, a diaphragm feeding device 240, and a winding device 250. The cell manufacturing apparatus 200 of the first embodiment may be configured for manufacturing the cell 100 shown in FIGS. 1 to 3.

The first feeding device 210 is configured for providing the cathode pole piece 110, and the second feeding device 230 is configured for providing the anode pole piece 120; and the diaphragm feeding device 240 is configured for providing the diaphragm 130 between the cathode pole piece 110 and the anode pole piece 120 adjacent thereto. The amount of the first feeding device 210, the second feeding device 230, and the diaphragm feeding device 240 is determined according to the structure of the cell 100 to be processed. Specifically, in the present embodiment, there is one cathode pole piece 110 and one anode pole piece 120, and there are two diaphragms 130. Therefore, one first feeding device 210 and one second feeding device 230 are provided respectively, and two diaphragm feeding devices 240 are provided.

The first feeding device 210, the second feeding device 230, and the diaphragm feeding device 240 may each take the form of unwinding shaft, so as to realize the continuous feeding of the cathode pole piece 110, the anode pole piece 120 and the diaphragm 130.

The winding device 250 comprises a winding needle mechanism 251. Wherein, the winding needle mechanism 251 is capable of winding the anode pole piece 120, the cathode pole piece 110, and the diaphragm 130 into the cell 100. The wound cell 100 is roughly cylindrical or oval in shape and may be pressed into the flat structure. The flat structure comprises the straight area 101 and the bent areas 102. Wherein, the specific structure of the cell 100 and the definitions of the straight area 101 and the bent areas 102 have been described in detail in the foregoing, and thus will not be further elaborated herein.

In the present embodiment, the winding device 250 further comprises a turret 252 where a plurality of winding needle structures 251 are provided, and the turret 252 rotates to drive a plurality of winding needle structures 251 to sequentially transfer to a position capable of obtaining the anode pole piece 120, the cathode pole piece 110 and the diaphragm 130.

The turret 252 may be connected to a driving mechanism such as a motor and may rotate a certain angle under the drive of the driving mechanism. After the previous cell 100 is wound, the turret 252 rotates and brings the next winding needle structure 251 to the winding station (i.e., a position where the anode pole piece 120, the cathode pole piece 110 and the diaphragm 130 may be obtained). Then, the next winding needle structure 251 extends out and obtains the anode pole piece 120, the cathode pole piece 110 and the diaphragm 130. Once the previous cell 100 is cut off at the end of the material strip, the next winding needle structure 251 may start winding for the preparation of the next cell 100. In this way, the plurality of winding needle structures 251 may alternately enter the winding station and wind the cell, thereby accelerating the production rhythm to reduce waiting time, and thus improving production efficiency.

Before the cathode pole piece 110 enters the winding device 250, it still needs to be processed by the pole piece processing device 220. Specifically, the pole piece processing device 220 may form the broken portion 103 in a preset area of the cathode pole piece 110 and provide the connector 140. The broken portion 103 divides the cathode pole piece 110 where it is located into at least two pole piece subsections, and the at least two pole piece subsections are integrally connected via the connector 140.

Further, in the wound cell 100, the preset area of the cathode pole piece 110 is located in the bent areas 102. That is, in the resulting cell 100, at least a portion of the cathode pole piece 110 located in the bent areas 102 has the broken portion 103. As previously described, since the area corresponding to the broken portion 103 does not have the positive electrode active substrate layer and thus does not have lithium ions, the amount of lithium ions that can be de-intercalated from the cathode pole piece 110 located in the bent areas 102 will be significantly reduced. Therefore, the cell 100 manufactured by the cell manufacturing apparatus 200 may reduce or avoid the occurrence of the lithium precipitation phenomenon.

Specifically, in the present embodiment, the cell manufacturing apparatus 200 further comprises a second pole piece processing device (not shown in the figure), which is configured for forming a second broken portion in the area of the anode pole piece 120 corresponding to the preset area.

The structure of the second pole piece processing device may be completely identical to the structure of the pole piece processing device 220. As previously described, by forming the second broken portion on the anode pole piece 120, it is possible to effectively prevent the "powdering off' of the negative electrode active material, thereby enhancing the quality of the cell 100. Moreover, the provision of the second broken portion can also suppress the occurrence of lithium precipitation phenomena to some extent.

The connector 140 is an insulating component that can integrally connect the divided at least two pole piece subsections as a whole, thus preventing the cathode pole piece 110 from shifting during the winding process. Specifically, in the present embodiment, the connector 140 is a tape that is adhered to at least one side of the cathode pole piece 110 and covers the broken portion 103.

Please refer to FIG. 7 again, in the present embodiment, the pole piece processing device 220 comprises a holding-transporting mechanism 221, a cutting mechanism 222 and a tape-bonding mechanism 223.

There are at least two holding-transporting mechanisms 221, and each holding-transporting mechanism 221 is capable of holding and transporting the cathode pole piece 110. The cutting mechanism 222 is provided between two adjacent holding-transporting mechanisms 221, and each cutting mechanism 222 may cut off the cathode pole piece 110, so as to obtain at least two pole piece subsections. At least two pole piece subsections may be held by different holding-transporting mechanisms 221 and transported in the transporting direction. Furthermore, the at least two holding-transporting mechanisms 221 are capable of driving the held pole piece subsection to be transported by different distances in the transporting direction, such that the broken portion 103 is formed between the two adjacent pole piece subsections. Specifically, the different holding-transporting mechanisms 221 may form a speed difference therebetween, so that the pole piece subsections held by the different holding-transporting mechanisms 221 are pulled apart to form the broken portion 103.

It should be noted that in other embodiments, the cutting mechanism 222 may also punch the cathode pole piece 110 by the cooperation of the male die and the female die, and may cut off a scrap with a certain width on the cathode pole piece 110, thereby naturally forming the broken portion 103 while cutting the cathode pole piece 110 off. In this way, each holding-transporting mechanism 221 may maintain a uniform velocity without the need to pull the pole piece subsections apart by the holding-transporting mechanism 221.

Specifically, in the present embodiment, there are three holding-transporting mechanisms 221 and two cutting mechanisms 222, with a cutting mechanism 222 provided between each pair of adjacent holding-transporting mechanisms 221. After the cathode pole piece 110 is processed by the pole piece processing device 200, it is possible to form two broken portions 103 and obtain three pole piece subsections, each of which is held by the holding-transporting mechanism 221.

The tape-bonding mechanism 223 may bond the tape as the connector 140 to at least one side of the cathode pole piece 110 and cover the broken portion 103, so as to integrally connect at least two pole piece subsections as a whole. The tape-bonding mechanism 223 is also provided between two adjacent holding-transporting mechanisms 221, and the tape-bonding mechanism 223 exists in pairs with the cutting mechanism 222. More specifically, the tape-bonding mechanism 223 is located downstream of the cutting mechanism 222 with which it is paired.

Specifically, in the present embodiment, the tape-bonding mechanism 223 pastes tape on both sides of the cathode pole piece 110 to enhance reliability.

The working process of the pole piece processing device 220 is described below with reference to the drawings.

For ease of description in the following, the three holding-transporting mechanisms 221 from the upstream to downstream end (from bottom to top in Figure 7) of the transporting direction of the cathode pole piece 110, are respectively referred to as the first, second, and third holding-transporting mechanisms 221; the two cutting mechanisms 222 are respectively referred to as the first cutting mechanism 222 and the second cutting mechanism 222; the two tape-bonding mechanisms 223 are respectively referred to as the first tape-bonding mechanisms 223 and the second tape-bonding mechanism 223; the obtained three pole piece subsections are respectively referred to as the first pole piece subsection, the second pole piece subsection, and the third pole piece subsection.

After the cathode pole piece 110 enters the pole piece processing device 220, the first cutting mechanism 222 on the pole piece transporting direction cuts off the cathode pole piece 110 between the first and second holding-transporting mechanisms 221, and the second cutting mechanism 222 cuts off the cathode pole piece 110 between the second and third holding-transporting mechanisms 221, resulting in three pole piece subsections; the first, second, and third holding-transporting mechanisms 221 hold the pole piece subsections and transport them downstream respectively. Wherein, the transporting speed of the first holding-transporting mechanism 221 is less than that of the second holding-transporting mechanism 221, and the transporting speed of the second holding-transporting mechanism 221 is less than that of the third holding-transporting mechanism 221. Consequently, the first pole piece subsection moves a shorter distance downstream than the second pole piece subsection, and the second holding-transporting mechanism moves a shorter distance than the third holding-transporting mechanism. In this way, the distances between the three pole piece subsections extend so as to form two broken portions 103.

Further, after the broken portions 103 is formed, the two tape-bonding mechanisms 223 stick the tape on either side of the two broken portions 103 respectively, such as by applying adhesive tape. Specifically, the first tape-bonding mechanism 223 applies tape to bond the first pole piece subsection to the second pole piece subsection, and the second tape-bonding mechanism 223 applies tape to bond the second pole piece subsection to the third pole piece subsection, thus integrally connecting the three pole piece subsections as a whole.

The pole piece processing device 220 may form more broken portions 103 on the cathode pole piece 110. In this way, a plurality of cathode pole pieces 110 located in the bent areas 102 may be provided with the broken portion 103, thereby further inhibiting the occurrence of the lithium precipitation phenomenon. When it is necessary to form more broken portions 103 in the cathode pole piece 110, the amount of the holding-transporting mechanisms 221, the cutting mechanisms 222, and the tape-bonding passageways 223 may be increased, such that the number of the cutting mechanisms 222 and the tape-bonding mechanisms 223 is consistent with the number of the broken portions 103 to be formed.

Specifically, in the present embodiment, each holding-transporting mechanism 221 comprises a clamping roller, and the rotational speed of the clamping roller of each holding-transporting mechanism 221 may be adjusted individually. By adjusting the rotational speed of the clamping roller, it is possible to adjust the transporting speed of each holding-transporting mechanism 221. In this way, it is possible to create a velocity difference between the different holding-transporting mechanisms 221, so as to pull apart the respective pole piece subsections they are clamping to form the broken portion 103. The clamping roller may be adjusted more easily, takes up less space, and contributes to the compactness of the holding-transporting mechanism 221.

It should be noted that the objective of pulling apart the respective pole piece subsections they are clamping may also be achieved by controlling the start-stop timing of the clamping roller of the holding-transporting mechanism 221. Furthermore, in other embodiments, the holding-transporting mechanism 221 may also hold and transport the cathode pole piece 110 through the reciprocating movement of the clamping plate, and by controlling the moving speed and start-stop timing of the clamping plates, achieve the objective of pulling apart the respective pole piece subsections they are clamping.

In order to facilitate the smooth entry of the cathode pole piece 110 and the anode pole piece 120 into the winding device 250, in the present embodiment, the cell manufacturing apparatus 200 further comprises a pole piece feeding device 260, which is configured for inserting the cathode pole piece 110 and the anode pole piece 120 into the winding needle mechanism 251.

Specifically, the pole piece feeding device 260 may be provided with a clamping roller, and by holding and driving the pole piece with the clamping roller, the pole piece may be inserted into the corresponding winding needle mechanism 251. The amount of the pole piece feeding devices 260 corresponds to the amount of pole pieces. For example, in the present embodiment, there is one cathode pole piece 110 and one anode pole piece 120, and there are provided two pole piece feeding devices 260, each of which is configured for feeding the cathode pole piece 110 and anode pole piece 120, respectively.

Regarding the above cell manufacturing apparatus 200, the manufactured cell 100 has bent areas 102 and a straight area 101, and the cathode pole piece 110 at least partially located in the bent areas 102 is formed with the broken portion 103. There is no positive electrode active material layer in the area corresponding to the broken portion 103 and thus there is no lithium ion, therefore, the amount of lithium ions that can de-intercalate from the cathode pole piece 110 located in the bent areas 102 will be significantly reduced. As a result, the manufactured cell 100 can effectively suppress the occurrence of lithium precipitation phenomena. Moreover, the cell manufacturing apparatus 200 may continuously manufacture the cell 100 with high efficiency.

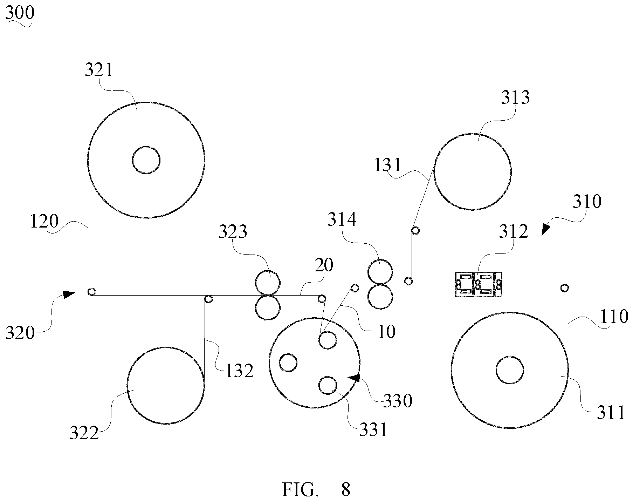

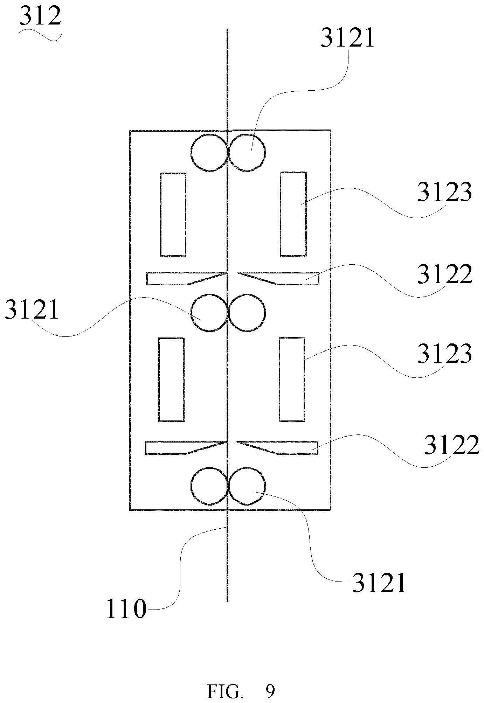

Please refer to FIGS. 8 and 9, the cell manufacturing apparatus 300 in the second embodiment of the present disclosure comprises a first feeding device 310, a second feeding device 320, and a winding device 330. Wherein, the cell manufacturing apparatus 300 in the second embodiment may also be configured for manufacturing the cell 100 shown in FIGS. 1 to 3.

The first feeding device 310 comprises a cathode unwinding mechanism 311, a pole piece processing mechanism 312, a first diaphragm unwinding mechanism 313, and a first compounding mechanism 314. Wherein, the cathode unwinding mechanism 311 is configured for providing the cathode pole piece 110, the first diaphragm unwinding mechanism 313 is configured for unwinding the first diaphragm 131, and the first compounding mechanism 314 is capable of receiving the cathode pole piece 110 and the first diaphragm 131 and compounding them to obtain the first compound material strip 10.

Specifically, in the present embodiment, the first compounding mechanism 314 comprises an upper pressure roller (not labeled in the figure) and a lower pressure roller (not labeled in the figure), between which the cathode pole piece 110 and the first diaphragm 131 may pass through.

Both the upper pressure roller and the lower pressure roller are rotatable about their respective axes, and one of them is connected to a driving component and is capable of active rotation. When the cathode pole piece 110 and the first diaphragm 131 pass through, the upper pressure roller and the lower pressure roller work together to clamp the cathode pole piece 110 and the first diaphragm 131. As the upper pressure roller and the lower pressure roller rotate, the cathode pole piece 110 and the first diaphragm 131 are pressed and compounded to form the first compound material strip 10. Wherein, the upper pressure roller and the lower pressure roller may both be heat pressure rollers to form the first compound material strip 10 by hot pressing. Obviously, the first compound material strip 10 may also be formed by cold pressing.

The second feeding device 320 comprises an anode unwinding mechanism 321, a second diaphragm unwinding mechanism 322, and a second compounding mechanism 323. Wherein, the anode unwinding mechanism 321 is configured for providing the anode pole piece 120, the second diaphragm unwinding mechanism 322 is configured for unwinding the second diaphragm 132, and the second compounding mechanism 323 is capable of receiving the anode pole piece 120 and the second diaphragm 132 and compounding them to obtain the second compound material strip 20. The structure of the second compounding mechanism 323 may be completely identical to that of the first compounding mechanism 314, and thus will not be further elaborated here.

It should be noted that the second diaphragm unwinding mechanism 322 may have a structure completely identical to that of the first diaphragm unwinding mechanism 313, and the first diaphragm 131 and the second diaphragm 132 both refer to the diaphragm 130 of the cell 100 shown in FIGS. 1 and 2. For ease of distinction, the diaphragms in the first compound material strip 10 and the second compound material strip 20 are specifically referred to as a first diaphragm 131 and a second diaphragm 132, respectively. The first diaphragm 131 and the second diaphragm 132 are insulating films that serve to prevent short-circuiting.

In addition, the first feeding device 310 further comprises a pole piece processing mechanism 312, which is capable of forming the broken portion 103 in a preset area of the cathode pole piece 110 and provides the connector 140. The broken portion 103 divides the cathode pole piece 110 where it is located into at least two pole piece subsections, which are integrally connected via the connector 140. That is, after forming the broken portion 103 on the cathode pole piece 110, the connector 140 connects the two sides of the broken portion 103, allowing the cathode pole piece 110 to be compounded smoothly with the first diaphragm 131. Moreover, in the obtained first compound material strip 10, there is a broken portion 103 formed in the preset area of the cathode pole piece 110.

The winding device 330 comprises the winding needle mechanism 331, which is capable of winding the first compound material strip 10 and the second compound material strip 20 into the cell 100. The wound cell 100 is roughly cylindrical or oval in shape and may be pressed into the flat structure. The flat structure comprises the straight area 101 and the bent areas 102. Wherein, the preset area of the cathode pole piece 110 is located in the bent areas 102. The specific structure of the cell 100 and the definitions of the straight area 101 and the bent areas 102 have been described in detail in the foregoing, and thus will not be further elaborated herein.

It can be seen that in the manufactured cell 100, at least part of the cathode pole piece 110 located in the bent areas 102 has the broken portion 103. Therefore, the cell 100 manufactured by the cell manufacturing apparatus 300 may also reduce or avoid the occurrence of lithium precipitation phenomena.

The structure of the pole piece processing mechanism 312 is the same as that of the pole piece processing device 220 in the cell manufacturing apparatus 200 of the first embodiment. Specifically, further referring to FIG. 9, in the present embodiment, the pole piece processing mechanism 312 comprises a holding-transporting mechanism 3121, a cutting mechanism 3122, and a tape-bonding mechanism 3123.

There are at least two holding-transporting mechanism 3121, each of which may hold and transport the cathode pole piece 110. The cutting mechanism 3122 is located between two adjacent holding-transporting mechanisms 3121, and each cutting mechanism 3122 may cut the cathode pole piece 110 off to obtain at least two pole piece subsections. At least two pole piece subsections may be held by different holding-transporting mechanisms 3121 and transported along the transporting direction. Moreover, the at least two holding-transporting mechanisms 3121 may drive the pole piece subsections they hold for different distances along the transporting direction, thus forming a broken portion 103 between two adjacent pole piece subsections. Specifically, different holding-transporting mechanisms 3121 may form the broken portion 103 by forming a speed difference to pull apart the respective pole piece subsections they are holding.

Specifically, in the present embodiment, there are three holding-transporting mechanisms 3121 and two cutting mechanisms 3122, with a cutting mechanism 3122 provided between two adjacent holding-transporting mechanisms 3121. After the cathode pole piece 110 is processed by the pole piece processing device 200, two broken portions 103 may be formed on the cathode pole piece 110 to obtain three pole piece subsections, each of which is held by one holding-transporting mechanism 3121.

The tape-bonding mechanism 3123 may bond the tape as a connector 140 on at least one side of the cathode pole piece 110 and cover the broken portion 103, so as to integrally connect at least two pole piece subsections. The tape-bonding mechanism 3123 is also provided between two adjacent holding-transporting mechanisms 3121, and the tape-bonding mechanism 3123 exists in pairs with the cutting mechanism 3122. More specifically, the tape-bonding mechanism 3123 is located downstream of the cutting mechanism 3122 with which it is paired.

Specifically, in the present embodiment, the tape-bonding mechanism 3123 bonds tapes on both sides of the cathode pole piece 110 to enhance reliability.

In addition, the cathode unwinding mechanism 311, the anode unwinding mechanism 321, the first diaphragm unwinding mechanism 313 (second diaphragm unwinding mechanism 322), and the winding device 330 in the above cell manufacturing apparatus 300 are structurally the same as the first feeding device 210, the second feeding device 220, the diaphragm feeding device 240, and the winding device 250 in the cell manufacturing apparatus 200 of the first embodiment, and thus will not be further elaborated herein.

Regarding the above cell manufacturing apparatus 300, the manufactured cell 100 not only effectively suppresses the occurrence of lithium precipitation phenomena, and moreover, before winding, the first diaphragm 131 is compounded with the cathode pole piece 110 to form the first compound material strip 10, and the second diaphragm 132 is compounded with the anode pole piece 120 to form the second compound material strip 20. In this way, it is possible to reduce the amount of material strips entering the winding device 330, and thus avoid fluctuations in the relative position of the pole piece and the diaphragm in the process of winding, thereby ensuring that each film layer in the manufactured cell 100 has a high degree of alignment and is not prone to misplace, and facilitating the control of tension for speeding up the device.

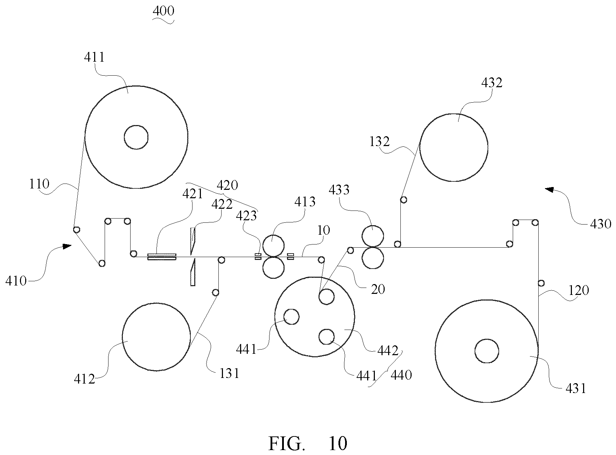

Please refer to FIG. 10, the cell manufacturing apparatus 400 in the third embodiment of the present disclosure comprises a first feeding device 410, a pole piece processing device 420, a second feeding device 430, and a winding device 440. Wherein, the cell manufacturing apparatus 400 in the third embodiment may also be configured for manufacturing the cell 100 shown in FIG. 4.

The first feeding device 410 is configured for providing a first compound material strip 10, which comprises the first diaphragm 131 and the cathode pole piece 110 covering the first diaphragm 131. The second feeding device 430 is configured for providing a second compound material strip 20, which comprises the second diaphragm 132 and the anode pole piece 120 covering the second diaphragm 132. Wherein, both the first diaphragm 131 and the second diaphragm 132 refer to the diaphragm 130 in the cell 100 shown in FIG. 4. For ease of distinction, the diaphragms in the first compound material strip 10 and the second compound material strip 20 are respectively referred to as the first diaphragm 131 and the second diaphragm 132. The first diaphragm 131 and the second diaphragm 132 are insulating films that serve to prevent short-circuiting.

In the present embodiment, the first feeding device 410 comprises a cathode unwinding mechanism 411, a first diaphragm unwinding mechanism 4412 and a first compounding mechanism 413.

The cathode unwinding mechanism 411 is configured for unwinding the cathode pole piece 110; the first diaphragm unwinding mechanism 4412 is configured for unwinding the first diaphragm 131. Both the cathode unwinding mechanism 411 and the first diaphragm unwinding mechanism 4412 may take the form of unwinding shafts. The cathode pole piece 110 and the first diaphragm 131 may be wound on the cathode unwinding mechanism 411 and the first diaphragm unwinding mechanism 4412, respectively, in the form of the material strip, and may be continuously unwound by the cathode unwinding mechanism 411 and the first diaphragm unwinding mechanism 4412.

The first compounding mechanism 413 is capable of receiving the cathode pole piece 110 and the first diaphragm 131 and compounding them to obtain the first compound material strip 10. Specifically, in the present embodiment, the first compounding mechanism 413 comprises an upper pressure roller (not labeled in the figure) and a lower pressure roller (not labeled in the figure), through which the cathode pole piece 110 and the first diaphragm 131 may pass.

Both the upper pressure roller and the lower pressure roller are rotatable about their respective axes, and one of them is connected to a driving component and is capable of active rotation. When the cathode pole piece 110 and the first diaphragm 131 pass through, the upper pressure roller and the lower pressure roller work together to clamp the cathode pole piece 110 and the first diaphragm 131. As the upper pressure roller and the lower pressure roller rotate, the cathode pole piece 110 and the first diaphragm 131 are pressed and compounded to form the first compound material strip 10, and the obtained first compound material strip 10 may be transported downstream driven by the first compounding mechanism 413. Wherein, the upper pressure roller and the lower pressure roller may both be heat pressure rollers to form the first compound material strip 10 by hot pressing. Obviously, in other embodiments, the first compound material strip 10 may also be formed by cold pressing.

In this way, the first compound material strip 10 may be manufactured in real time during the continuous unwinding of the cathode pole piece 110 and the first diaphragm 131, which helps to improve the efficiency. It should be noted that, in other embodiments, the first compound material strip 10 may also be manufactured in advance and unwound directly by the first feeding device 410 when needed.

In the present embodiment, the second feeding device 430 comprises an anode unwinding mechanism 431, a second diaphragm unwinding mechanism 432 and a second compounding mechanism 433. Wherein, the anode unwinding mechanism 431 is configured for unwinding the anode pole piece 120; the second diaphragm unwinding mechanism 432 is configured for unwinding the second diaphragm 132; the second diaphragm unwinding mechanism 432 is used for unwinding the second diaphragm 132; the second compounding mechanism 433 is capable of receiving the anode pole piece 120 and the second diaphragm 132 and compounding them to obtain the second compound material strip 20.

The structures of the anode unwinding mechanism 431, the second diaphragm unwinding mechanism 432 and the second compounding mechanism 433 may be the same as those of the cathode unwinding mechanism 411, the first diaphragm unwinding mechanism 4412 and the first compounding mechanism 413 respectively, and thus will not be further elaborated herein.

Further, the pole piece processing device 420 is capable of forming the broken portion 103 on the cathode pole piece 110 of the first compound material strip 10 (see FIG. 5). The broken portion 103 extends in the width direction of the cathode pole piece 110 and may break the cathode pole piece 110. It can be seen that there is no positive electrode active material in the broken portion 103.

The winding device 440 comprises the winding needle mechanism 441. Wherein, the winding needle mechanism 441 is capable of winding the first compound material strip 10 and the second compound material strip 20 into the cell 100. The wound cell 100 is roughly cylindrical or oval in shape and may be pressed into the flat structure. The flat structure comprises the straight area 101 and the bent areas 102. Wherein, the specific structure of the cell 100 and the definitions of the straight area 101 and the bent areas 102 have been described in detail in the foregoing, and thus will not be further elaborated herein.

In the present embodiment, the winding device 440 further comprises a turret 442 where a plurality of winding needle structures 441 are provided, and the turret 442 rotates to drive a plurality of winding needle structures 441 to sequentially transfer to a position capable of obtaining the first compound material strip 10 and the second compound material strip 20.

The turret 442 may be connected to a driving mechanism such as a motor and may rotate a certain angle under the drive of the driving mechanism. After the previous cell 100 is wound, the turret 442 rotates and brings the next winding needle structure 251 to the winding station (i.e., a position where the first compound material strip 10 and the second compound material strip 20 may be obtained). Then, the next winding needle structure 251 extends out and clamps the first compound material strip 10 and the second compound material strip 20. Once the previous cell 100 is cut off at the end of the material strip, the next winding needle structure 251 may start winding for the preparation of the next cell 100. In this way, the plurality of winding needle structures 441 may alternately enter the winding station and wind the cell, thereby accelerating the production rhythm to reduce waiting time, and thus improving production efficiency.

In the manufactured cell 100, the broken portion 103 of the cathode pole piece 110 is located in the bent areas 102. That is, at least a portion of the cathode pole piece 110 of the cell 100 located in the bent areas 102 has a broken portion 103. Since the area corresponding to the broken portion 103 lacks the positive electrode active substation layer and thus lacks lithium ions, the amount of lithium ions that may be de- intercalated from the cathode pole piece 110 located in the bent areas 102 will be significantly reduced. Therefore, even if the adjacent anode pole piece 120 experience "powdering off' during bending, since the amount of lithium ions that may be de-intercalated from the cathode pole piece 110 is also reduced, it is possible to prevent the lithium intercalation sites of the negative electrode active material layer of the anode pole piece 120 from being far less than the amount of lithium ions that can be provide by the positive electrode active material layer of the adjacent cathode pole piece 110, thereby reducing or avoiding the occurrence of the lithium precipitation phenomenon.

Before winding, the first diaphragm 131 is compounded with the cathode pole piece 110 to form the first compound material strip 10. The second diaphragm 132 is compounded with the anode pole piece 120 to form the second compound material strip 20. In this way, it is possible to reduce the number of the material strips entering the winding device 440 and thus avoid the fluctuation of the relative positions of the pole piece and the diaphragm in the process of winding, thereby ensuring that each film layer in the manufactured cell 100 has a high degree of alignment and is not prone to misplace, and facilitating the control of tension for speeding up the device.

Specifically, in the present embodiment, the pole piece processing device 420 comprises a holding-transporting mechanism 421 and a cutting mechanism 422. Both the holding-transporting mechanism 421 and the cutting mechanism 422 are provided between the cathode unwinding mechanism 411 and the first compounding mechanism 413. The holding-transporting mechanism 421 is capable of holding and transporting the cathode pole piece 110, the cutting mechanism 422 is capable of cutting off the cathode pole piece 110 between the holding-transporting mechanism 421 and the first compounding mechanism 413, and the holding-transporting mechanism 421 is capable of pulling apart at a cut-off position to form the broken portion 103.

Specifically, the holding-transporting mechanism 421 may pull apart at the cut-off portion by regulating the transporting speed. The continuous cathode pole piece material strip first passes through the holding-transporting mechanism 421 and the cutting mechanism 422 before entering the first compounding mechanism 413. After the cathode pole piece 110 is cut off by the cutting mechanism 422, the cathode pole piece 110 located upstream of the cut-off portion is compounded with the first diaphragm 131 in the first compounding mechanism 413, and the obtained first compound material strip 10 may be driven by the first compounding mechanism 413 to maintain a uniform transporting speed; at this time, the holding-transporting mechanism 421 decelerates or stops the transporting, so that the cut-off portion of the cathode pole piece 110 is pulled apart until the broken portion 103 is formed. Next, the holding-transporting mechanism 421 is regulated in speed to be synchronized with the first compounding mechanism 413, and assists the first compounding mechanism 413 in driving the first compound material strip 10 to be further transported downstream while feeding the cathode pole piece 110 located downstream of the cut-off portion into the first compounding mechanism 413.

Specifically, in the present embodiment, the holding-transporting mechanism 421 comprises clamping plates, which are capable of reciprocating movement along the transporting direction of the cathode pole piece 110. After the cathode pole piece 110 is cut off, the clamping plates may clamp the cathode pole piece 110 located upstream of the cut-off portion and move along with the cathode pole piece 110. In this way, it is possible to prevent the cut-off cathode pole piece 110 from sagging due to an excessively long overhang at the end, thereby ensuring that the cathode pole piece 110 may smoothly enter the first compounding mechanism 413.

It should be noted that in other embodiments, the cutting mechanism 422 may further punch the cathode pole piece 110 by the cooperation between a male die and a female die, and may remove a certain width of waste material from the cathode pole piece 110, thereby naturally forming the broken portion 103 while cutting the cathode pole piece 110 off. In this case, the holding-transporting mechanism 421 may maintain synchronous transporting with the first compounding mechanism 413, without the need to change the speed of the holding-transporting mechanism 421 to pull the cut-off portion of the cathode pole piece 110 apart to form the broken portion 103.

One or more broken portions 103 may be formed on the cathode pole piece 110. When a plurality of broken portions 103 are required, the holding-transporting mechanism 421 and the cutting mechanism 422 may simply repeat the above operations.

In the present embodiment, the pole piece processing device 420 further comprises a tape-bonding mechanism 423, which is capable of bonding a first tape 150 (see

FIG. 5) on a side of the cathode pole piece 110 so as to bond, to the first diaphragm 131, the cathode pole piece 110 at a side of the broken portion 103 proximate to the holding-transporting mechanism 421.

The broken portion 103 may divide the cathode pole piece 110 into two pole piece subsections, and the cathode pole piece 110 located at a side of the broken portion 103 proximate to the holding-transporting mechanism 421 refers to the upstream end of one of the pole piece subsections. The upstream end refers to the front end in the transporting direction of the first compound material strip 10, for example, if the first compound material strip 10 is transported from left to right, then the right end is the upstream end. Before the first compound material strip 10 enters the winding device 440, the first compound material strip 10 generally needs to wind around a guide roller to change direction. When winding around the guide roller, the upstream end of the pole piece subsection is prone to upwarping and detaching from the first diaphragm 131. Since the first tape 150 may bond the upstream end of the pole piece subsection to the first diaphragm 131, the cathode pole piece 110 will not detach from the first diaphragm 131 when the first compound material strip 10 winds around the guide roller.

As shown in FIG. 5, a portion of the first tape 150 passes through the broken portion 103 to be bonded to the first diaphragm 131, and another portion of the first tape 150 is bonded to the cathode pole piece 110. The first tape 150 may be bonded before or after the cathode pole piece 110 being compounded with the first diaphragm 131.

Specifically, in the present embodiment, the tape-bonding mechanism 423 is provided between the cutting mechanism 422 and the first compounding mechanism 413. That is, the tape-bonding mechanism 423 completes the tape-bonding before the cathode pole piece 110 being compounded with the first diaphragm 131. Therefore, in the compounding process of the cathode pole piece 110 and the first diaphragm 131 by the first compounding mechanism 413, the first tape 150 may also prevent the cathode pole piece 110 and the first diaphragm 131 from being misaligned.

Further, in the present embodiment, the tape-bonding mechanism 423 is further capable of bonding a second tape (not shown in the figure) on a side of the cathode pole piece 110 so as to bond, to the first diaphragm 131, the cathode pole piece 110 at a side of the broken portion 103 distal to the holding-transporting mechanism 421.

As described above, the broken portion 103 may divide the cathode pole piece 110 into the two pole piece subsections, and the cathode pole piece 110 at a side of the broken portion 103 distal to the holding-transporting mechanism 421 refers to the downstream end of one of the pole piece subsections. The downstream end refers to the rear end in the transporting direction of the first compound material strip 10, for example, if the first compound material strip 10 is transported from left to right, then the left end is the downstream end. After the downstream end of the pole piece subsection is bonded to the first diaphragm 131 by the second tape, it is possible to prevent the cathode pole piece 110 from deviating with respect to the first diaphragm 131 during transporting, which is advantageous in improving the quality of the cell 100.

In addition, in the present embodiment, the cell manufacturing apparatus 400 further comprises a second pole piece processing device (not shown in the figure), which is configured for forming a second broken portion (not shown in the figure) in an area of the anode pole piece 120 of the second compound material strip 20 corresponding to the broken portion 103.

The structure of the second pole piece processing device may be completely identical to the structure of the pole piece processing device 420, and thus is not elaborated herein. Similarly, there is no negative electrode active material at the position of the anode pole piece 120 corresponding to the second broken portion. Therefore, when the anode pole piece 120 is bent in the bent areas 102 of the cell 100, it is possible to effectively avoid "powdering off' of the negative electrode active material, thereby preventing the manufactured cell 100 from being mixed with more powder impurities and being beneficial to improving the quality of the cell 100.

Although the presence of the second broken portion reduces the content of the negative electrode active material on the anode pole piece 120 in the bent areas 102 to some extent and thus results in a reduction in the number of lithium intercalation sites, however, in the case where the second broken portion is not formed, the portion of the reduced negative electrode active material generally falls off from the surface of the anode pole piece 120 during bending. Moreover, the existence of the second broken portion may reduce the resistance when the anode pole piece 120 is bent, and may prevent "powdering off' of other parts except the second broken portion to some extent. That is, the loss of the negative electrode active material caused by the second broken portion is actually reduced compared to the conventional case. Therefore, the provision of the second broken portion may also suppress the occurrence of the lithium precipitation phenomenon to some extent.

Regarding the above cell manufacturing apparatus 400, the manufactured cell 100 has bent areas 102 and a straight area 101, and the cathode pole piece 110 at least partially located in the bent areas 102 is formed with the broken portion 103. There is no positive electrode active material layer in the area corresponding to the broken portion 103 lacks a positive electrode active material layer and is no lithium ions, therefore, the amount of lithium ions that can de-intercalate from the cathode pole piece 110 located in the bent areas 102 will be significantly reduced. As a result, the manufactured cell 100 can effectively suppress the occurrence of lithium precipitation phenomena. Moreover, the first diaphragm 131 is compounded with the cathode pole piece 110 to form the first compound material strip 10, and the second diaphragm 132 is compounded with the anode pole piece 120 to form the second compound material strip 20. In this way, it is possible to reduce the amount of material strips entering the winding device 440, and thus avoid fluctuations in the relative position of the pole piece and the diaphragm in the process of winding, thereby ensuring that each film layer in the manufactured cell 100 has a high degree of alignment and is not prone to misplace, and facilitating the control of tension for speeding up the device.

The technical features of the above embodiments may be compounded arbitrarily. For the sake of brevity, not all possible combinations of the individual technical features of the above embodiments are described. However, a combination of these technical features shall be considered to be within the scope of the present specification, as long as there is no contradiction in the combination.

The above embodiments are merely expressions of a few implementations of the present disclosure described in a specific and detailed manner, and are not to be construed as limitation to the scope of the present disclosure. It is to be noted that for a person of ordinary skill in the art, various modifications and improvements could be made without departing from the principle of the present disclosure, and shall fall into the protection scope of the present disclosure. Therefore, the protection scope of the present disclosure shall be subject to the appended claims.

## Claims

1. A cell, **characterized by** comprising a cathode pole piece, an anode pole piece and a diaphragm located between the cathode pole piece and the anode pole piece adjacent thereto, wherein the cathode pole piece, the anode pole piece and the diaphragm are wound and pressed to form a flat structure, the cell has a straight area and bent areas located at two ends of the straight area, and the cathode pole piece at least partially located in the bent areas is provided with a broken portion extending along a width direction thereof.

2. The cell according to claim 1, wherein the broken portion divides the cathode pole piece where it is located into at least two pole piece subsections, which are integrally connected via a connector.

3. The cell according to claim 2, wherein the connector is a tape bonded to at least one side of the cathode pole piece to cover the broken portion.

4. The cell according to claim 1, wherein the cathode pole piece is capable of forming one bent portion every time it winds around one of the bent areas, and is formed with a plurality of bent portions from a winding starting end to a winding terminating end, and the broken portion is formed on a first one of the plurality of bent portions from the winding starting end to the winding terminating end.

5. The cell according to claim 1, wherein from the winding starting end to the winding terminating end, each of the first two, the first four, or the first six bent portions is formed with the broken portion.

6. The cell according to any one of claims 1 to 5, wherein a second broken portion is formed at a position, corresponding to the broken portion, of the anode pole piece at least partially located in the bent areas.

7. A battery, **characterized by** comprising a casing and the cell according to any one of claims 1 to 6, the cell is contained in the casing and the casing is filled with electrolyte.

8. A cell manufacturing apparatus, **characterized by** comprising:
a first feeding device configured for providing a cathode pole piece;
a pole piece processing device capable of forming a broken portion in a preset area of the cathode pole piece and providing a connector, the broken portion dividing the cathode pole piece where it is located into at least two pole piece subsections which are integrally connected via the connector;
a second feeding device configured for providing an anode pole piece;
a diaphragm feeding device configured for providing a diaphragm between a cathode pole piece and an anode pole piece adjacent thereto;
a winding device comprising a winding needle mechanism which is capable of winding the anode pole piece, the cathode pole piece and the diaphragm into a cell;
wherein the cell is capable of being pressed into a flat structure with a straight area and bent areas, and the preset area is located in the bent areas.

9. The cell manufacturing apparatus according to claim 8, wherein the pole piece processing device comprises:
at least two holding-transporting mechanisms, each of which is capable of holding and transporting the cathode pole piece;
a cutting mechanism provided between two adjacent holding-transporting mechanisms, each cutting mechanism being capable of cutting off the cathode pole piece so as to obtain at least two pole piece subsections, the at least two holding-transporting mechanisms being capable of holding the at least two pole piece subsections respectively and pulling two adjacent pole piece subsections apart to form the broken portion;
a tape-bonding mechanism, which is capable of bonding a tape as the connector on at least one side of the cathode pole piece to cover the broken portion so as to integrally connect the at least two pole piece subsections.

10. The cell manufacturing apparatus according to claim 8, further comprising a second pole piece processing device, which is configured for forming a second broken portion in an area, corresponding to the preset area, of the anode pole piece.

11. A cell manufacturing apparatus, **characterized by** comprising:
a first feeding device comprising a cathode unwinding mechanism, a pole piece processing mechanism, a first diaphragm unwinding mechanism and a first compounding mechanism, wherein the cathode unwinding mechanism is configured for providing a cathode pole piece, the pole piece processing mechanism is capable of forming a broken portion in a preset area of the cathode pole piece and providing a connector, the broken portion divides the cathode pole piece where it is located into at least two pole piece subsections which are integrally connected via the connector, the first diaphragm unwinding mechanism is configured for unwinding a first diaphragm, and the first compounding mechanism is capable of receiving the cathode pole piece and the first diaphragm and compounding them, so as to obtain a first compound material strip;
a second feeding device comprising an anode unwinding mechanism, a second diaphragm unwinding mechanism and a second compounding mechanism, wherein the anode unwinding mechanism is configured for providing an anode pole piece, the second diaphragm unwinding mechanism is configured for unwinding a second diaphragm, and the second compounding mechanism is capable of receiving the anode pole piece and the second diaphragm and compounding them, so as to obtain a second compound material strip;
a winding device comprising a winding needle mechanism which is capable of winding the first compound material strip and the second compound material strip into a cell;
wherein the cell is capable of being pressed into a flat structure with a straight area and bent areas, and the preset area is located in the bent areas.

12. The cell manufacturing apparatus according to claim 11, wherein the pole piece processing mechanism comprises:
at least two holding-transporting mechanisms, each of which is capable of holding and transporting the cathode pole piece;
a cutting mechanism provided between two adjacent holding-transporting mechanisms, each cutting mechanism being capable of cutting the cathode pole piece off to obtain at least two pole piece subsections, the at least two holding-transporting mechanisms being capable of holding the at least two pole piece subsections respectively and pulling the two adjacent pole piece subsections apart to form the broken portion;
a tape-bonding mechanism, which is capable of bonding a tape serving as the connector on at least one side of the cathode pole piece, to cover the broken portion so as to integrally connect the at least two pole piece subsections.

13. A cell manufacturing apparatus, **characterized by** comprising:
a first feeding device configured for providing a first compound material strip, the first compound material strip comprising a first diaphragm and a cathode pole piece covering the first diaphragm;
a pole piece processing device capable of forming a broken portion on the cathode pole piece of the first compound material strip;
a second feeding device configured for providing a second compound material strip, the second compound material strip comprising a second diaphragm and an anode pole piece covering the second diaphragm; and
a winding device comprising a winding needle mechanism which is capable of winding the first compound material strip and the second compound material strip into a cell;
wherein the cell is capable of being pressed into a flat structure with a straight area and bent areas, and the broken portion is located in the bent areas.

14. The cell manufacturing apparatus according to claim 13, wherein the first feeding device comprises:
a cathode unwinding mechanism configured for unwinding the cathode pole piece;
a first diaphragm unwinding mechanism configured for unwinding the first diaphragm; and
a first compounding mechanism capable of receiving the cathode pole piece and the first diaphragm and compounding them so as to obtain the first compound material strip.

15. The cell manufacturing apparatus according to claim 14, wherein the pole piece processing device comprises a holding-transporting mechanism and a cutting mechanism, which are both provided between the cathode-unwinding mechanism and the first compounding mechanism, the holding-transporting mechanism is capable of holding and transporting the cathode pole piece, the cutting mechanism is capable of cutting off the cathode pole piece between the holding-transporting mechanism and the first compounding mechanism, and the holding-transporting mechanism is capable of pulling apart at a cut-off position to form the broken portion.

16. The cell manufacturing apparatus according to claim 15, wherein the pole piece processing device further comprises a tape-bonding mechanism, which is capable of bonding a first tape on a side of the cathode pole piece so as to bond, to the first diaphragm, the cathode pole piece at a side of the broken portion proximate to the holding-transporting mechanism.

17. The cell manufacturing apparatus according to claim 16, wherein the tape-bonding mechanism is further capable of bonding a second tape on a side of the cathode pole piece so as to bond, to the first diaphragm, the cathode pole piece at a side of the broken portion distal to the holding-transporting mechanism.

18. The cell manufacturing apparatus according to claim 14, wherein the first compounding mechanism comprises an upper pressure roller and a lower pressure roller, and the cathode pole piece and the first diaphragm are capable of passing between the upper pressure roller and the lower pressure roller.

19. The cell manufacturing apparatus according to claim 13, wherein the second feeding device comprises:
an anode unwinding mechanism configured for unwinding the anode pole piece;
a second diaphragm unwinding mechanism configured for unwinding the second diaphragm; and
a second compounding mechanism capable of receiving the anode pole piece and the second diaphragm and compounding them so as to obtain the second compound material strip.

20. The cell manufacturing apparatus according to claim 13, further comprising a second pole piece processing device, which is configured for forming a second broken portion in an area, corresponding to the broken portion, of the anode pole piece of the second compound material strip.
